(19) **Europäisches Patentamt**
**European Patent Office**
**Office européen des brevets**

(11) **EP 1 651 486 B1**

(12) **EUROPÄISCHE PATENTSCHRIFT**

(45) Veröffentlichungstag und Bekanntmachung des Hinweises auf die Patenterteilung:
**21.05.2008 Patentblatt 2008/21**

(51) Int Cl.:
**B60T 8/36** (2006.01)

(21) Anmeldenummer: **04766347.1**

(22) Anmeldetag: **28.07.2004**

(86) Internationale Anmeldenummer:
**PCT/EP2004/051638**

(87) Internationale Veröffentlichungsnummer:
**WO 2005/012056 (10.02.2005 Gazette 2005/06)**

(54) **VERFAHREN UND VORRICHTUNG ZUM MESSEN EINES FLUIDDRUCKS MITTELS EINES STELLGERÄTS**

METHOD AND DEVICE FOR MEASURING A FLUID PRESSURE BY MEANS OF A REGULATING DEVICE

PROCEDE ET DISPOSITIF POUR MESURER UNE PRESSION DE FLUIDE AU MOYEN D'UN ORGANE DE REGULATION

(84) Benannte Vertragsstaaten:
**DE FR HU IT**

(30) Priorität: **31.07.2003 DE 10335586**
**26.11.2003 DE 10355836**

(43) Veröffentlichungstag der Anmeldung:
**03.05.2006 Patentblatt 2006/18**

(73) Patentinhaber: **Continental Teves AG & Co. oHG**
**60488 Frankfurt am Main (DE)**

(72) Erfinder:
• **HEINZ, Micha**
**64293 Darmstadt (DE)**
• **OEHLER, Peter**
**65929 Frankfurt-Höchst (DE)**
• **JÖCKEL, Wolfgang**
**63179 Obertshausen (DE)**

• **SCHMITZ, Axel**
**65795 Hattersheim (DE)**
• **ENGELMANN, Mario**
**61449 Steinbach/Ts. (DE)**
• **FEY, Wolfgang**
**65527 Niedernhausen (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
**DE-A- 4 440 531** **DE-A- 10 216 485**
**US-A- 4 665 348**

• **PATENT ABSTRACTS OF JAPAN Bd. 0153, Nr. 79 (E-1115), 25. September 1991 (1991-09-25) & JP 3 150809 A (TOYOTA MOTOR CORP), 27. Juni 1991 (1991-06-27)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Druckmessung eines Fluids gemäß Oberbegriff von Anspruch 1 und eine elektrohydraulische Druckregelvorrichtung gemäß Oberbegriff von Anspruch 10. Ein derartiges Verfahren und eine derartige Vorrichtung sind aus der DE-A-4440531 bekannt.

Aus der EP 1 282 544 A1 ist es bekannt, in ABS-Steuergeräten für Kraftfahrzeugbremssysteme, aber auch in sogenannten Fahrdynamikreglern mit zusätzlichen Funktionen wie ESP etc., zur Messung des Hydraulikdrucks in den Radbremsen Drucksensoren mit einer Messmembran, deren Verformung Rückschluss auf den anliegenden Differenzdruck gibt, einzusetzen.

Die zusätzliche Bereitstellung von Drucksensoren in einem hochintegrierten elektronischen Bremsensteuergerät hat einen unerwünscht großen Einfluss auf den benötigten Bauraum und die Herstellungskosten des Steuergeräts.

Es wurde nun gefunden, dass sich die vorstehend beschriebenen Nachteile durch das Verfahren gemäß Anspruch 1 überwinden lassen, bei dem ein zur Steuerung oder Regelung des Hydraulikdrucks einsetzbarer Aktor, welcher insbesondere ein Hydraulikventil ist, zur Druckmessung eingesetzt wird.

Der Einsatz eines Aktors als Drucksensor wird dadurch möglich gemacht, dass der den mechanischen Teil des Aktors ansteuernde magnetische Teil der Anordnung einem Regelkreis unterworfen wird, welcher insbesondere die auf den mechanischen Teil einwirkende Kraft regelt. Auf diese Weise kann eine Druckmessung mittels eines Stellgeräts ohne zusätzliche Drucksensoren durchgeführt werden.

Unter dem Begriff Stellgeräte werden Ventile und Schieber zum Einstellen eines Fluiddurchflusses verstanden. Bevorzugt handelt es sich bei dem eingesetzten Stellgerät um ein Ventil. Als bevorzugtes Fluid kommt neben Luft auch eine geeignete Hydraulikflüssigkeit in Betracht, welche bei der Anwendung einer Bremse insbesondere eine handelsübliche Bremsflüssigkeit ist.

Das Stellgerät besitzt vorzugsweise eine vollständig geöffnete und eine vollständig geschlossene Position. Je nach Art des Stellgeräts, stromlos offen (SO-V) oder stromlos geschlossen (SG-V), nimmt die Ventilbetätigungseinrichtung (z.B. der Ventilstößel) eine dieser Positionen, hervorgerufen durch ein Rückstellelement ein. Ein geeignetes Rückstellelement kann bevorzugt eine Feder sein, welche eine definierte Kraft/Weg-Kennlinie aufweist, die sich nach dem Verfahren bevorzugt durch eine Geradengleichung annähern lässt. Wie weiter unten weiter ausgeführt wird, kann im Falle eines Kräftegleichgewichts am Ventilbetätigungselement der Stellgeräteöffnungshub (Position der Ventilbetätigungseinrichtung) aus der messbaren magnetischen Kraft berechnet werden.

Dass Stellgerät umfasst eine elektromagnetische Anordnung, in der mittels der Ansteuerung einer Erregerspule ein mechanisches Betätigungselement bewegbar ist. Bei dem beschriebenen Betätigungselement handelt es sich vorzugsweise um einen axial beweglichen, magnetisierbaren Anker, welcher durch das Magnetfeld der Erregerspule bewegt werden kann. Insbesondere befindet sich dieser Anker innerhalb eines Ventildoms.

Die magnetische Kraft oder der Stellgeräteöffnungshub, welche/welcher nach dem Verfahren der Erfindung geregelt wird, lässt sich bevorzugt aus der aufintegrierten induzierten Spannung bestimmen. Wie bereits erwähnt, kann die magnetische Kraft in den Öffnungshub durch Anwendung der bekannten Kraft-/Weg-Gleichung für das Rückstellelement berechnet werden, wenn der Kraft/Weg-Zusammenhang bekannt ist.

Im magnetischen Kreis ist das Stellgerät vorzugsweise mit einem oder mehreren zusätzlichen Messelementen zur Bestimmung des Magnetflusses versehen, wobei das zusätzliche Messelement insbesondere eine Messspule ist.

In neueren Generationen von Hydraulikregelvorrichtungen werden sogenannte analogisierte Schaltventile eingesetzt. Ein solches vorzugsweise in dem erfindungsgemäßen Verfahren eingesetztes analogisiertes Schaltventil ist ein stromangesteuertes Magnetventil, welches nicht nur zum vollständigen Öffnen oder Schließen ausgelegt ist, jedoch durch gezielte Stromeinstellung und dessen konstruktive Auslegung so betrieben wird, dass dieses analoge Regeleigenschaften besitzt.

Das Verfahren nach der Erfindung wird bevorzugt in einer elektrohydraulischen Vorrichtung zur Bremsenregelung für Kraftfahrzeuge eingesetzt.

Für eine genaue Druckmessung ist es vorteilhaft, wenn der Stellgeräteöffnungshub auf einen vorbestimmten Wert eingestellt wird. Hierzu muss der entsprechende Erregerstrom im drucklosen Zustand zunächst einmal bekannt sein. In diesem Zusammenhang ist zu erwähnen, dass sich nicht unerhebliche Streuungen von Stellgerät zu Stellgerät einer Produktionsserie ergeben, welche die Einstellung des gewünschten Stroms nicht ohne weiteres mit der notwendigen Genauigkeit zulässt. Daher ist es zweckmäßig, z.B. individuelle Kennlinien für das Ventil verfahrensmäßig zu nutzen, welche zumindest Toleranzen der Mechanik, wie z.B. schwankende Federkraft $F_{Feder}$, und unterschiedliche magnetische Widerstände der Luftspalte, ausgleichen können.

Hierzu kann auf eine vorhandene Kennlinie oder auf eine nach dem folgenden Verfahren ermittelbare Kennlinie (drucklose Kalibrierung) zurückgegriffen werden. An Stelle von Kennlinien können auch Kenngrößen oder Kennfelder herangezogen werden, die insbesondere in einer Recheneinheit gespeichert sind. Zum Ermitteln der Kennlinie wird vorzugsweise die nachfolgend als drucklose Kalibrierung bezeichnete Routine durchgeführt, bei der eine oder mehrere stellgerätespezifischen Kennlinien, Kennfelder oder Kenngrößen $KG_{ind}$ für das Stellgerät ermittelt werden, so dass vermittels dieser Kenngrößen der Zusammenhang zwischen Durchfluss G, der Stromstärke I in der Erregerspule und der vorliegenden Druckdifferenz $\Delta P$ festgelegt ist.

Der Kalibriervorgang erfolgt bevorzugt unter Berücksichtigung des Öffnungswegs 1 und/oder der Federkraft $F_{Feder}$ und/oder des magnetische Widerstand des Stellgeräts.

Vorzugsweise werden bei der Messroutine individuelle magnetische und mechanische Kenngrößen $KG_{ind}$ des Stellgeräts berücksichtigt, welche im wesentlichen für die fertigungsbedingte Streuung in der jeweiligen Kennlinie verantwortlich sind. Die weniger fertigungsbedingt streuenden Kenngrößen des Stellgeräts lassen sich bevorzugt durch weitere, allgemeine Kenngrößen $KG_{all}$ einmal für die Baureihe festlegen und im elektronischen Steuergerät dauerhaft speichern. Aus den individuellen und allgemeinen Kenngrößen kann dann die Stellgerätekennlinie und damit der erforderliche differenzdruckabhängige Ansteuerstrom für das Stellgerät berechnet werden.

Nach einer bevorzugten Ausführungsform des Kalibrierverfahrens wird der magnetische Gesamtwiderstand des magnetischen Kreises gemessen. Generell gilt, dass an Stelle des magnetischen Widerstands auch die Induktivität L des entsprechenden Magnetkreises, bezogen auf die Windungszahl N der Spule, als äquivalente physikalische Größe in entsprechender Weise zur Durchführung des erfindungsgemäßen Verfahrens herangezogen werden kann. Dabei wird insbesondere der magnetische Widerstand in der vollständig geöffneten und/oder vollständig geschlossenen Stellgeräteposition bestimmt. Ganz besonders bevorzugt wird bei der Kalibrierung der maximale Stößelhub und/oder die Federkraft bestimmt.

Vorzugsweise ist das Stellgerät mit einer oder mehreren zusätzlichen Messelementen, insbesondere Messspulen versehen. Die Messspule kann elektrisch unabhängig von der Ansteuerspule geschaltet sein. Es ist aber nach einer bevorzugten Ausführungsform möglich, die Messspule elektrisch in Reihe mit der Ansteuerspule zu schalten. Hierdurch ergibt sich der Vorteil, dass lediglich drei Ansteuerleitungen nach außen geführt werden müssen.

Mit Hilfe eines nach einer anderen Ausführungsform der Erfindung im Bereich des Stellgeräts angeordneten Messelements ist es möglich, innere physikalische Parameter des Stellgeräts zu ermitteln und diese bei der Berechnung des Drucks zu berücksichtigen.

Vorzugsweise können als Messelement außer der Spule prinzipiell alle magnetfeldabhängigen Sensoren (z.B. Hallsensoren, MR-Sensoren) verwendet werden, wenn sie zur Erfassung des wirksamen magnetischen Flusses geeignet sind. Der Einsatz einer Spule erscheint jedoch auf Grund der Möglichkeit einer kostengünstigen Fertigung besonders zweckmäßig.

Die auf Grundlage der Bilanzgleichung $F_{Feder} + F_{Hydraulik} = F_{magn}$ bei einer bestimmten Druckdifferenz ermittelten sogenannten Halteströme entsprechen noch nicht ganz genau den für das Öffnen des Ventils tatsächlich notwendigen Öffnungsströmen, da diese durch Strömungseffekte immer etwas niedriger sind, als die berechneten Halteströme. Es hat sich gezeigt, dass die genauere Öffnungsstromkennlinie $I_{Öffnung}(\Delta P)$ bevorzugt dadurch ermittelt werden kann, dass in dem benötigten Druckdifferenzbereich der Haltestromkennlinie $I_{Halte}(\Delta P)$ ein konstanter negativer Stromoffset $I_{koor}^{const}$ zuaddiert wird. Nach einer bevorzugten Ausführungsform des Kalibrierverfahrens wird deshalb der Ventilöffnungsstrom des Ventils an Stelle des Haltestroms zu Grunde gelegt. Hierzu wird insbesondere der Ventilöffnungsstrom durch einen Korrekturterm korrigiert, welcher im einfachsten Fall ein konstanter Stromoffset ist. Neben dieser sogenannten Öffnungsstromkorrektur ist es außerdem möglich und bevorzugt einen weiteren Korrekturterm vorzusehen, welcher den stromabhängigen Einfluss des ferromagnetischen Magnetkreises mitberücksichtigt. Neben der zuvor beschriebenen magnetischen Korrektur kann es außerdem zweckmäßig sein, eine thermische Korrektur unter Berücksichtigung des ohmschen Erregerspulenwiderstands durchzuführen.

Die Ansteuerung der Erregerspule, welche das Stellgerät ansteuert, erfolgt vorzugsweise mittels eines pulsweitenmodulierten Stroms (PWM), wobei der Spulenwiderstand insbesondere über den duty-cycle der PWM-Ansteuerung bestimmt wird. Ganz besonders bevorzugt fließt der Spulenwiderstand bei der Berechnung der stellgeräteindividuellen Parameter $KG_{ind}$ zur Erhöhung der Genauigkeit mit ein.

Nach dem Verfahren bevorzugt wird zum Ermitteln des Magnetflusses oder der magnetischen Kraft das Integral über die induzierte Spannung im magnetischen Kreis des Stellgeräts bestimmt. Gemäß einer weiteren unabhängigen Ausführungsform des Verfahrens der Erfindung wird die Messung des Integrals am Spulenabgriff bzw. am Abgriff der Messspule mittels einer besonders einfach aufgebauten sogenannten elektronischen Rechteckformerschaltung durchgeführt. Es handelt sich dabei um ein Verfahren zum Ermitteln des magnetischen Flusses in mindestens einem über eine Treiberstufe elektrisch ansteuerbaren induktiven Stellgerät durch Auswertung oder Einstellen der an der Erregerspule des Stellgeräts induzierten Spannung $U_{ind}$ mittels einer elektronischen Messeinrichtung, wobei die an der Spule anliegende Spannung aktiv durch die Messeinrichtung oder die elektronische Ansteuerung des induktiven Stellgerätes oder Aktor-Bauelements auf einem im wesentlichen konstanten Wert gehalten wird und die Zeit $t_1$ bestimmt wird, in der der durch das induktive Bauelement und die Messeinrichtung fließende Strom beim Einschalten oder Abschalten eine Spannung induziert.

Weitere bevorzugte Ausführungsformen ergeben sich aus den Unteransprüchen und der nachfolgenden Beschreibung von Ausführungsbeispielen an Hand von Figuren.

Es zeigen

Fig. 1    eine schematische Darstellung der Hydraulikkomponenten eines Druckregelventils,

Fig. 2    ein Prinzipschaltbild eines Regelkreises zum Einregeln einer konstanten Stößelposition,

Fig. 3    eine Skizze zur Erläuterung der prinzipiellen geometrischen Form an der engsten Stelle im Ventil und

Fig. 4    eine schematische Darstellung eines Kraftfahrzeugbremsenssteuergeräts.

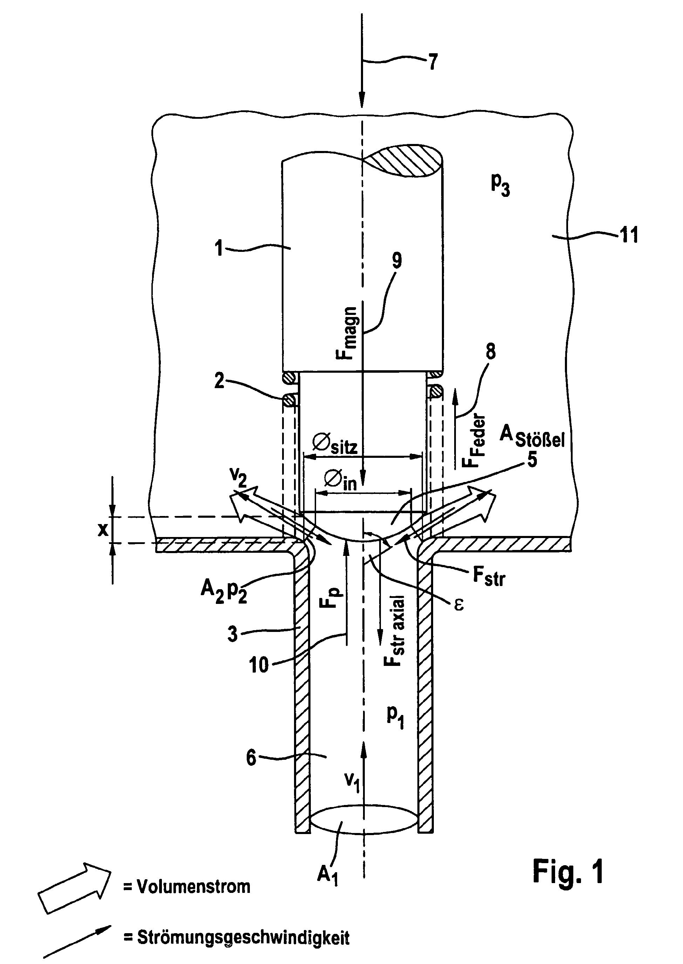

In Fig. 1 wird Ventilstößel 1 von einer nicht dargestellten elektromagnetischen Anordnung axial in die Richtungen von Pfeil 7 bewegt, so dass die Stößelfläche 5 abdichtend in Ventilsitz 3 eingeführt wird. Die Kraft von Feder 2, welche auf Ventilsitz 3 aufsitzt, wirkt auf Ventilstößel 1 in Richtung von Pfeil 8 ($F_{Feder}$). Die elektromagnetische Anordnung erzeugt eine Kraftkomponente $F_{magn}$ in Richtung des Pfeils 9. Im Bereich des zum Radbremszylinder führenden Bremskreises herrscht ein Druck, welcher mit $p_3$ bezeichnet ist. Im einem nicht dargestellten druckerzeugenden Hauptzylinder der Bremsanlage liegt der Druck $p_1$ an. Pfeil 10 gibt die Kraftrichtung der hydraulischen Kraft $F_p$ an, welche auf Stößel 1 wirkt.

Die schematische Darstellung in Fig. 1 dient zur Erläuterung der bei der Abschätzung der hydraulischen Kraft berücksichtigten Einflussgrößen. Als die am Ventilstößel wirkenden Kräfte sind zum einen die Strömungskraft $F_{Str}$ zu nennen, die sich aufgrund der hohen Geschwindigkeit im engsten Querschnitt $A_2$ und dem daraus resultierenden Unterdruck $p_2$ ergibt, was zu einem Zuziehen des Ventils in Richtung von $F_{Str\ axial}$ führt, zum anderen die Druckkraft $F_p$, die durch das Drücken der Flüssigkeit auf den Stößel entsteht, was zu einem Öffnen des Ventils führt (falls gilt $p_1 \geq p_3$). Für die Strömungskraft wird die übliche, aus der Bernoulli-Gleichung abgeleitete Formel angesetzt:

$$Q = \alpha_D A_2 \sqrt{2\frac{(\Delta p)}{\rho}} \quad ,$$

wobei Q der Volumenstrom, $A_2$ die Durchströmfläche im engsten Querschnitt, $\alpha_D$ der Durchflusskoeffizient, $\Delta p = p_1 - p_3$ der Differenzdruck und $\rho$ die Dichte der Bremsflüssigkeit ist.

Zur Vereinfachung wird dabei angenommen, dass der Durchflusskoeffizient $\alpha_D \approx [0.58 ... 0.7]$ relativ konstant ist gegenüber dem Öffnungshub x.

Bei Vernachlässigung des instationären Teils der Strömungskraft kann diese angegeben werden zu:

$$F_{Str} = \rho v_2 Q$$

wobei $v_2$ die Strömungsgeschwindigkeit an der engsten Stelle ist. Es gilt außerdem $Q = A_2 v_2$. Hieraus ergibt sich die Strömungskraft zu

$$F_{Str} = 2 A_2 \alpha_D^2 \Delta p$$

Auf den Stößel wirkt nur die axiale Komponente dieser Kraft. Über $\varepsilon$, dem Winkel zwischen der Ventilachse und der Strömung im Bereich des engsten Querschnitts, lässt sich die axial wirkende Strömungskraft angeben:

$$F_{Str\_axial} = F_{Str} \cos \varepsilon$$

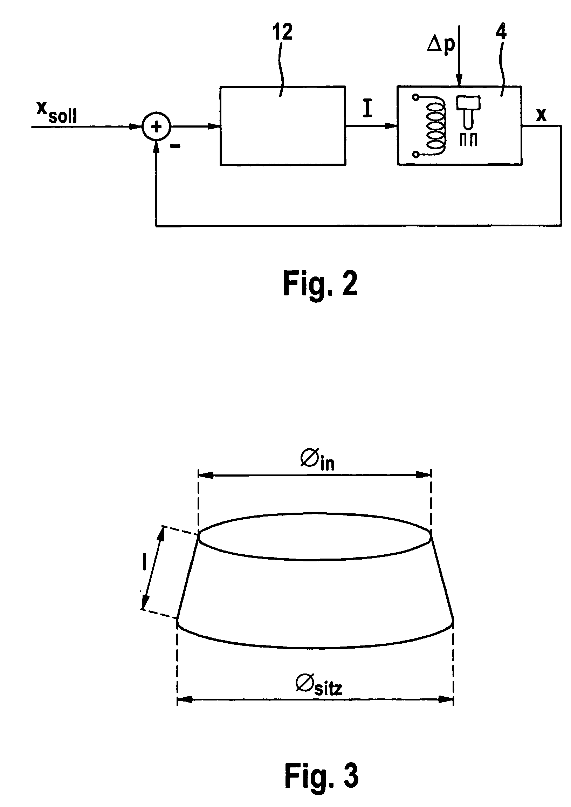

Die Fläche der sogenannten Hub-Blende an der engsten Stelle lässt sich über die Mantelfläche eines geraden Kegelstumpfs recht genau bestimmen, wie dies in Fig. 3 modellhaft skizziert ist. Dabei gilt folgender Zusammenhang:

$$A_2 = l * \Pi \frac{\varnothing_{sitz} + \varnothing_{in}}{2} \, ,$$

wobei 1 = x sin ε ist.

Aufgrund der strömenden Flüssigkeit durch das geöffnete Ventil entsteht eine zusätzliche Druckkraft $F_P$, die der Strömungskraft $F_{Str}$ im Falle $P_3 < P_1$ im Wirkungssinn entgegengesetzt ist, im Falle $P_3 > P_1$ jedoch mit gleichem Wirkungssinn angreift.

Die Druckkraft ist proportional zum Differenzdruck:

$$F_P = \alpha_{akorr} * A_1 * \Delta p$$

Der Korrekturfaktor $\alpha_{korr} \leq 1$ soll zum Ausdruck bringen, dass der Druck zum Rande des Stößels hin abnimmt.

Die Federkraft lässt sich beschreiben durch die Formel

$$F_{Feder} = D * x.$$

Aus dem bereits erwähnten Kräftegleichgewicht am Stößel ergibt sich folgende Differentialgleichung für die Bewegung des Stößels:

$$F_P - F_{Str\_axial} = F_{magn} - F_{Feder} + m_{Stößel+Anker} \ddot{x}$$

Fig. 2 stellt eine mögliche Schaltungsanordnung für die erfindungsgemäße Stößelhubregelung dar. $X_{soll}$ bezeichnet den Sollwert für die Stößelstellung. Der Startwert $X_{soll}$ ist durch einen im Speicher des Reglers abgelegten Kennwert festgelegt. Durch Regler 12 wird Stößelhub x konstant gehalten. Damit ist die Beschleunigung null. Die Differentialgleichung kann nach der magnetischen Kraft aufgelöst werden und die einzelnen Kräfte entsprechend eingesetzt werden zu:

$$F_{magn} = \alpha_{korr} A_1 \Delta p - \Pi x \sin \varepsilon \frac{\varnothing_{sitz} + \varnothing_{in}}{2} \alpha_D^2 \, 2 \Delta p \cos \varepsilon + Dx$$

Diese Gleichung lässt sich unter Verwendung der Konstanten a und b auch einfacher formulieren:

$$F_{magn} = a * \Delta p + b,$$

Die Konstanten a und b hängen dabei nur von der Geometrie, der Federkonstanten und der konstant eingeregelten Stößelposition ab.

Aus der Beziehung von magnetischer Kraft zu magnetischem Fluss lässt sich der magnetische Fluss angeben zu:

$$\Phi = \sqrt{2\mu_0 A_{Anker}(a * \Delta p + b)}$$

Entsprechend der nachfolgend beschriebenen alternativen Berechnungsmethode kann eine noch weitere Erhöhung der Genauigkeit bei der Druckbestimmung erzielt werden.

Somit lässt sich mittels der weiter unten beschriebenen Messung des magnetischen Flusses über das Integral der induzierten Spannung die Druckdifferenz über dem Ventil qualitativ bestimmen.

Ergänzend sei noch erwähnt, dass es zur Berechnung eines genauen quantitativen Zusammenhang zweckmäßig erscheint, noch die nachfolgend erwähnten Einflussgrößen zu berücksichtigen:

- Der in Fig. 1 bezeichnete Querschnitt $A_1$ lässt sich als eine erste Strömungsblende auffassen, so dass sich die Möglichkeit ergibt, das Modell als eine Reihenschaltung aus zwei Blenden zu beschreiben. Aus diesem Modell kann dann ein gemittelter Durchfluss berechnet werden.

- Der Druckabfall der besagten ersten Blende $A_1$ kann bei der Berechnung eines Korrekturterms für einen Druckabfall berücksichtig werden.

Für die weitere Erläuterung der Erfindung erscheint es sinnvoll, die folgenden mathematischen Zusammenhänge anzugeben:

Die magnetische Kraft ergibt sich aus

$$ F_{magn} = \frac{1}{2 * \mu_0 * A_{Anker}} * \Phi^2 , $$

wobei $\mu_0$ die Permeabilitätskonstante (Luft), $A_{Anker}$ die Ankerfläche und $\Phi$ der magnetische Fluss ist.

Der magnetischer Fluss errechnet sich nach der Formel

$$ \Phi = \frac{\Theta}{R_{m,gesamt}} \qquad \text{mit} \quad \Theta = I * N , $$

wobei I der Spulen strom, N die Windungszahl der Ventilspule und $R_m^{gesamt}$ der gesamte magnetische Widerstand des Magnetkreises im Ventil ist.

Weiterhin gilt:

$$ U_{ind} = -N * \frac{d\Phi}{dt} \qquad \text{sowie} \qquad \Phi = -\frac{1}{N} \int_0^t U_{ind} dt . $$

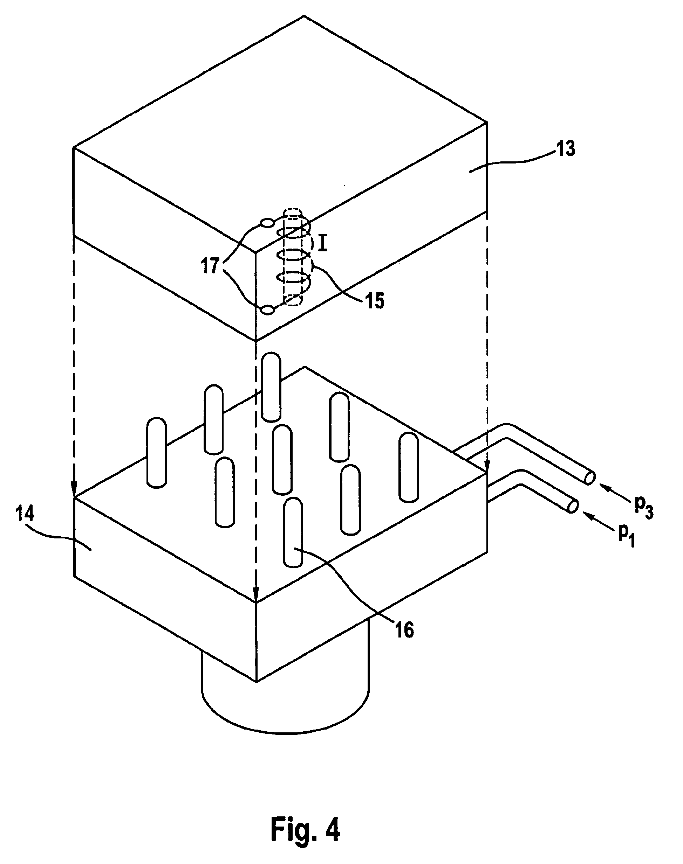

Fig. 4 stellt schematisch eine elektrohydraulische Regelvorrichtung für Personenkraftfahrzeugbremsen dar, welche aus Reglergehäuse 13 (ECU) mit einem Mikrocontrollersystem und einem mit diesem verbundenen Ventilblock 14 (HCU) besteht. Beim Zusammenbau der Regelvorrichtung werden die Erregerspulen 15 über die Ventildome 16 geschoben, welche die im Zusammenhang mit Fig. 1 beschriebenen Ventile enthalten. Der Regler umfasst außerdem eine Ansteuerschaltung, mit der der Strom I der einzelnen Erregerspulen individuell für jedes Ventil pulsweitenmoduliert eingestellt und auch gemessen werden kann. Regler 13 umfasst hierzu für jedes Ventil individuell ansteuerbare PWM-Treiberstufen. An den Klemmen 17 der Erregerspulen sind nicht dargestellte Messeinrichtungen vorgesehen, mit denen die Induktionsspannung $U_{ind}(t)$ gemessen werden kann.

Beim Abschalten des Erregerstroms I ergibt sich eine Änderung des magnetischen Flusses $\Phi$ in Ventilspule 15, welche über den Verlauf der Induktionsspannung $U_{ind}$ an der Spule gemessen werden kann. Hierzu wird in einer nicht dargestellten Messeinrichtung das zeitliche Integral über den Verlauf der induzierten Spannung $U_{ind}$ gebildet und dem Mikrocontroller des Reglers 13 zugeführt. Dieses Signal ist proportional zum durch die Ventilspule hervorgerufenen magnetischen Fluss $\Phi$, aus dem sich der Druck nach der oben angegebenen Formel berechnen lässt.

Die obigen Ausführungen beziehen sich auf ein Ventil, welches stromlos offen ist. In analoger Weise lässt sich das beschriebene Verfahren auch für Ventile einsetzen, welche stromlos geschlossen sind.

**Patentansprüche**

1.  Verfahren zur Bestimmung des Drucks eines Fluids oder des an einem Stellgerät vorliegenden Differenzdrucks, wobei zur Druckmessung ein elektromagnetisch ansteuerbares Stellgerät (4) herangezogen wird, welches

    - eine elektromagnetische Anordnung umfasst, bei der mittels der Ansteuerung einer Erregerspule ein mechanisches Betätigungselement bewegbar ist, und
    - eine Ventilbetätigungseinrichtung zum Öffnen und Schließen des Stellgeräts umfasst,

    wobei das Betätigungselement auf die Ventilbetätigungseinrichtung (1) eine mechanische Kraft zum Öffnen und/oder Schließen des Stellgeräts ausübt, **dadurch gekennzeichnet, dass** mit einem elektrischen Regelkreis die Position der Ventilbetätigungseinrichtung oder die magnetische Kraft geregelt wird, in dem die auf die Ventilbetätigungseinrichtung wirkende hydraulische Kraft durch Messung der auf das Betätigungselement wirkenden magnetischen Kraft vorzugsweise elektrisch gemessen und daraus der Druck in der Fluidleitung und/oder die im Stellgerät vorliegende Druckdifferenz bestimmt wird.

2.  Verfahren nach Anspruch 1, **dadurch gekennzeichnet, dass** das Stellgerät in ein hydraulisches Bremsensteuergerät eingebaut ist und neben der Funktion als Sensor-Element dieses Element gleichzeitig für eine Druckregelaufgabe als Aktor-Element genutzt wird.

3.  Verfahren nach Anspruch 1 oder 2, **dadurch gekennzeichnet, dass**. ein Rückstellelement (2) zum Öffnen oder Schließen des Schließelements bei nicht erregter Erregerspule und ein Ventilsitz (3) vorhanden ist, in den das Schließelement zum Öffnen oder Schließen des Stellgeräts eingreift.

4.  Verfahren nach mindestens einem der vorhergehenden Ansprüche, **dadurch gekennzeichnet, dass** zum Ermitteln eines Stroms zur Positionierung der Ventilbetätigungseinrichtung auf zuvor bestimmte individuelle Kenngrößen, Kennlinien oder Kennfelder zurückgegriffen wird, wobei diese individuellen Kenngrößen, Kennlinien oder Kennfelder insbesondere durch eine Kalibrierroutine, welche das Stellgerät im drucklosen Zustand ausmisst, bestimmt werden.

5.  Verfahren nach Anspruch 4, **dadurch gekennzeichnet, dass** für die Berechnung der stellgerätespezifischen Kenngrößen, Kennlinien oder Kennfelder der Öffnungsweg 1 und/oder die Federkraft $F_{Feder}$ und/oder der magnetische Widerstand des Stellgeräts bestimmt wird.

6.  Verfahren nach mindestens einem der Ansprüche 4 oder 5, **dadurch gekennzeichnet, dass** eine Kalibrierroutine durchgeführt wird, bei der neben den durch die eine Messroutine ermittelten stellgerätespezifischen Kenngrößen $KG_{ind}$ auch allgemeine, baureihenspezifische Kenngrößen $KG_{all}$ herangezogen werden.

7.  Verfahren nach mindestens einem der Ansprüche 4 bis 6, **dadurch gekennzeichnet, dass** in der Kalibrierroutine die Stößelkraft und/oder der magnetische Widerstand $R_M$ in der vollständig geöffneten und/oder vollständig geschlossenen Position des Stellgeräts bestimmt wird.

8.  Verfahren nach mindestens einem der Ansprüche 1 bis 7, **dadurch gekennzeichnet, dass** aus dem magnetischen Fluss die magnetische Kraft bestimmt wird.

9.  Verfahren nach mindestens einem der Ansprüche 4 bis 8, **dadurch gekennzeichnet, dass** die an der Erregerspule als Folge einer Stromänderung induzierte Spannung gemessen und insbesondere integriert wird.

10. Elektrohydraulische Druckregelvorrichtung mit mindestens einem Stellgerät zum Regeln des Drucks, wobei ein für die Druckregelung vorgesehenes Stellgerät zur Messung des Drucks herangezogen wird, **dadurch gekennzeichnet, dass** in der Druckregelvorrichtung das Verfahren gemäß mindestens einem der Ansprüche 1 bis 9 durchgeführt wird.

**Claims**

1.  Method of determining the pressure of a fluid or the differential pressure prevailing at an actuator, wherein an electromagnetically drivable actuator (4) is used for pressure measurement which

- comprises an electromagnetic arrangement in which a mechanical actuating element is movable by means of actuation of an exciter coil, and
- comprises a valve actuating device for opening and closing the actuator,

with the actuating element exerting a mechanical force on the valve actuating device (1) for opening and/or closing the actuator,

**characterized in that** an electric control circuit is used to control the position of the valve actuating device or the magnetic force, in which the hydraulic force acting on the valve actuating device is preferably measured electrically by measuring the magnetic force that acts on the actuating element, and the pressure in the fluid line and/or the pressure difference prevailing in the actuator is determined therefrom.

2. Method as claimed in claim 1,
**characterized in that** the actuator is mounted into a hydraulic brake control unit and, beside the function as a sensor element, this element is additionally used as an actor element for the task of pressure control.

3. Method as claimed in claim 1 or 2,
**characterized in that** a resetting element (2) is provided to open or close the closing element when the exciter coil is not excited, and a valve seat (3) is provided into which the closing element engages to open or close the actuator.

4. Method as claimed in at least any one of the preceding claims,
**characterized in that** previously defined individual parameters, characteristic curves, or characteristic fields are used for the determination of a current to position the valve actuating device, in which case these individual parameters, characteristic curves or characteristic fields are determined in particular by a calibration routine measuring the actuator in the pressureless condition.

5. Method as claimed in claim 4,
**characterized in that** for the calculation of the actuator-related parameters, characteristic curves or characteristic fields, the opening travel 1 and/or the spring force $F_{spring}$ and/or the magnetic resistance of the actuator are determined.

6. Method as claimed in at least any one of claims 4 or 5,
**characterized in that** a calibration routine is executed in which likewise general parameters $KG_{gen}$ related to the line of products are taken into account in addition to the actuator-related parameters $KG_{ind}$ which are established in a measuring routine.

7. Method as claimed in at least any one of claims 4 to 6,
**characterized in that** the tappet force and/or the magnetic resistance $R_M$ are determined in the calibration routine in the completely opened and/or completely closed position of the actuator.

8. Method as claimed in at least any one of claims 1 to 7,
**characterized in that** the magnetic force is determined from the magnetic flux.

9. Method as claimed in at least any one of claims 4 to 8,
**characterized in that** the voltage induced at the exciter coil as a result of a current variation is measured and more particularly integrated.

10. Electrohydraulic pressure control device including at least one actuator for controlling the pressure, in which case an actuator provided for pressure control is used to measure the pressure,
**characterized in that** the method according to at least any one of claims 1 to 9 is implemented in the pressure control device.

**Revendications**

1. Procédé pour déterminer la pression d'un fluide ou la pression différentielle régnant dans un appareil de réglage, un appareil de réglage (4) à commande électromagnétique étant utilisé pour mesurer la pression, lequel comprend

- un agencement électromagnétique dans lequel un élément d'actionnement mécanique est déplaçable au moyen de la commande d'une bobine d'excitation, et
- un dispositif d'actionnement de soupape pour ouvrir et fermer l'appareil de réglage,

l'élément d'actionnement exerçant sur le dispositif d'actionnement de soupape (1) une force mécanique pour ouvrir et/ou fermer l'appareil de réglage, **caractérisé en ce que** avec un circuit de régulation électrique la position du dispositif d'actionnement de soupape ou la force magnétique est régulée, **en ce que** la force hydraulique agissant sur le dispositif d'actionnement de soupape est mesurée de préférence électriquement par mesure de la force magnétique agissant sur l'élément d'actionnement, et à partir de celle-ci la pression dans la conduite du fluide et/ou la différence de pression régnant dans l'appareil de réglage est déterminée.

2. Procédé selon la revendication 1, **caractérisé en ce que** l'appareil de réglage est monté dans un appareil hydraulique de commande de frein et outre la fonction d'élément de capteur, cet élément est utilisé en même temps pour une tâche de régulation de la pression, en tant qu'élément actionneur.

3. Procédé selon la revendication 1 ou 2, **caractérisé en ce qu'**il est prévu un élément de rappel (2) pour ouvrir ou fermer l'élément de fermeture lorsque la bobine d'excitation n'est pas excitée, ainsi qu'un siège de soupape (3) dans lequel s'engage l'élément de fermeture pour ouvrir ou fermer l'appareil de réglage.

4. Procédé selon l'une au moins des revendications précédentes, **caractérisé en ce que** pour déterminer un courant afin de positionner le dispositif d'actionnement de soupape on a recours à des grandeurs caractéristiques, des courbes caractéristiques ou des champs caractéristiques individuels déterminés au préalable, ces grandeurs caractéristiques, courbes caractéristiques ou champs caractéristiques individuels étant déterminés en particulier par une routine d'étalonnage qui mesure l'appareil de réglage à l'état hors pression.

5. Procédé selon la revendication 4, **caractérisé en ce que** pour le calcul des grandeurs caractéristiques, courbes caractéristiques ou champs caractéristiques spécifiques de l'appareil de réglage, la course d'ouverture 1 et/ou la force de ressort $F_{Feder}$ et/ou la résistance magnétique de l'appareil de réglage est déterminée.

6. Procédé selon l'une au moins des revendications 4 ou 5, **caractérisé en ce qu'**il est procédé à une routine d'étalonnage dans laquelle on utilise aussi, outre les grandeurs caractéristiques $KG_{ind}$ spécifiques de l'appareil de réglage, déterminées par une routine de mesure, des grandeurs caractéristiques $KG_{all}$ générales, spécifiques de la série de construction.

7. Procédé selon l'une au moins des revendications 4 à 6, **caractérisé en ce que** dans la routine d'étalonnage est déterminée la force de poussoir et/ou la résistance magnétique $R_M$ dans la position totalement ouverte et/ou totalement fermée de l'appareil de réglage.

8. Procédé selon l'une au moins des revendications 1 à 7, **caractérisé en ce que** la force magnétique est déterminée à partir du flux magnétique.

9. Procédé selon l'une au moins des revendications 4 à 8, **caractérisé en ce que** la tension induite sur la bobine d'excitation, en tant que conséquence d'une variation du courant, est mesurée et en particulier intégrée.

10. Dispositif électrohydraulique de régulation de la pression avec au moins un appareil de réglage pour réguler la pression, un appareil de réglage prévu pour la régulation de la pression étant utilisé pour mesurer la pression, **caractérisé en ce que** le procédé selon l'une au moins des revendications 1 à 9 est mis en oeuvre dans le dispositif de régulation de pression.

Fig. 1

⇨ = Volumenstrom

→ = Strömungsgeschwindigkeit

**Fig. 2**

**Fig. 3**

13

I

17

15

14

16

p₃

p₁

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4440531 A
- EP 1282544 A1